# EUROPEAN PATENT APPLICATION

(11) **EP 2 249 614 A1**
(43) Date of publication of application: **10.11.2010**
(21) Application number: 08700721.7
(22) Date of filing: 24.01.2008
(51) Int. Cl.: H04W 84/00

(54) **METHOD AND APPARATUS FOR LOCATING AND ASSISTANT LOCATING IN A PHS NETWORK**

(71) Applicant: Lucent Technologies Inc., 600-700 Mountain Avenue PO Box 636 Murray Hill, New Jersey 07974-0636 (US)
(72) Inventor: LIU, Guangjun, Qingdao Shandong 266061 (CN); OUYANG, Guangqi, Qingdao Shandong 266100 (CN); YU, Yuan, Qingdao Shandong 266061 (CN); MU, Haiguang, Qingdao Shandong 266061 (CN)
(74) Representative: Hervouet, Sylvie
(86) International application number: PCT/CN2008/000175
(87) International publication number: WO 2009/094802

(57) **Abstract**

The present invention proposes a method and apparatus for locating and assistant locating in PHS Network, which uses PHS Packet IP connection to provide real time location services to all mobile stations. In the present invention, the location services use PHS Packet IP connection without voice circuit occupation and more importantly, the present invention provides real time location services to all PHS Packet subscribers. Base on this invention, the CSID and Geographic Information which includes but not limited to the information of longitude and latitude will be transmitted upon PHS Packet IP connection from end to end. Moreover, the present invention could provide more attractive location based services (like real time tracing, navigation, etc.)

## Description

### FIELD OF THE INVENTION

The present invention relates to PHS network, and particularly to a mobile station and a PHS location server in PHS network.

### BACKGROUND OF THE INVENTION

Nowadays, PHS has been developed rapidly in China with more than one million PHS cell sites and 90 million PHS mobile phones in China. Since PHS uses micro-cell technology, there are many more cell sites than other wireless network installed to cover the same area. To utilize this advantage, PHS cell site based location services are introduced in China (Japan Wilcom did this in advance). The resolution of locating and navigation is almost in the same level as what GPS provided in urban area.

The existing PHS location services are implemented via PHS Short Message. The CSID (Cell Site Identify) is requested via PHS Short Message and then transferred back via another PHS Short Message. This causes lots of PHS Short Message occupy PHS voice call circuit resources; and moreover, there would be data losing or inestimable delay to get the data via back and forth Short Messages.

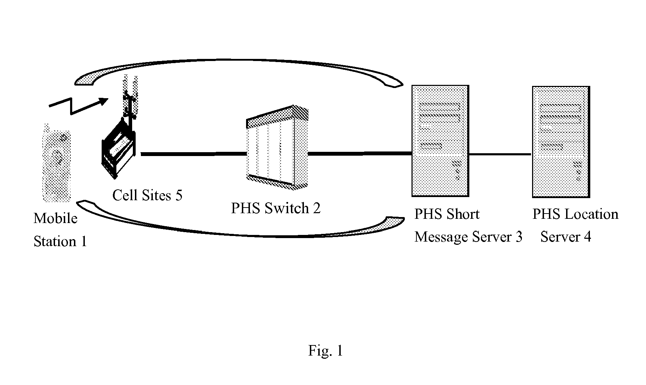

Fig. 1 is a schematic view of the existing location services based on PHS short messages in PHS network, which comprises a Mobile Station 1, a plurality of cell sites 5, a PHS Switch 2, a PHS Short Message Server 3 and a PHS Location Server 4. The current PHS location services use two PHS short messages to exchange location data between the PHS Location Server 4 and the Mobile Station 1.

Specifically, the Mobile Station 1 sends a specially formatted PHS short message to the PHS Switch 2 and the PHS Switch 2 retransmits the specially formatted PHS short message to the PHS Short Message Server 3, wherein, the specially formatted PHS short message comprises an access number and CSIDs of a plurality of cell sites surrounding the Mobile Station 1. Then, the PHS Short Message Server 3 sends the specially formatted PHS short message to the PHS Location Server 4 according to the access number that indicates which server the specially formatted PHS short message should be sent to. After receiving the specially formatted PHS short message, the PHS Location Server 4 retrieves CSIDs of a plurality of cell sites surrounding the Mobile Station 1 from the specially formatted PHS short message and calculates relevant geographic information of the Mobile Station 1 based on geographic information of a plurality of cell sites surrounding the Mobile Station 1 which is obtained based on CSIDs of a plurality of cell sites surrounding the Mobile Station 1. Finally, the PHS Location Server 4 sends the relevant geographic information of the Mobile Station 1 via another PHS short message to the Mobile Station 1.

Apparently, the existing location services in PHS network cause lots of PHS Short Messages occupy PHS voice call circuit resources; and moreover, PHS Short Message is not guaranteed to be delivered during the whole communication process and there is inestimable long delay especially under heavy call load.

### SUMMARY OF THE INVENTION

To this end, the present invention proposes a method and apparatus for locating and assistant locating in PHS Network, which uses PHS Packet IP connection to provide real time location services to all mobile stations (PHS Packet subscribers including PHS Packet phone, PDA w/ packet mode, Laptop w/ packet CF card, etc.).

According to the first aspect of the present invention, a method of locating in a mobile station of PHS network is provided, comprising the steps of: a. sending a first location request via IP packet to a PHS location server, wherein, said first location request comprises PSEN of said mobile station and CSIDs of a plurality of cell sites surrounding said mobile station; b. receiving a first location response via IP packet from said PHS location server, wherein, said first location response comprises relevant geographic information of said mobile station.

According to the second aspect of the present invention, a method of assistant locating in a mobile station of PHS network is provided, comprising the steps of: A . receiving a second location request via IP packet from a PHS location server; C . sending a second location response via IP packet to said PHS location server, wherein, said second location response comprises CSIDs of a plurality of cell sites surrounding said mobile station.

According to the third aspect of the present invention, a method of locating in a PHS location server of PHS network is provided, comprising the steps of: i. receiving a first location request via IP packet from a mobile station, wherein, said first location request comprises PSEN of said mobile station and CSIDs of a plurality of cell sites surrounding said mobile station; ii. obtaining relevant geographic information of said mobile station based on said CSIDs of a plurality of cell sites surrounding said mobile station in said first location request; iii. sending a first location response via IP packet to said mobile station, wherein said first location response comprises said relevant geographic information of said mobile station.

According to the fourth aspect of the present invention, a method of assistant locating in a PHS location server of PHS network is provided, comprising the steps of: I. receiving a location services request via IP packet retransmitted by an application server, wherein said location services request is used for requesting relevant geographic information of a mobile station; II. sending a second location request via IP packet to said mobile station; III. receiving a second location response via IP packet from said mobile station, wherein, said second location response comprises CSIDs of a plurality of cell sites surrounding said mobile station; IV. obtaining relevant geographic information of said mobile station based on said CSIDs of said cell sites surrounding said mobile station in said second location response; V. sending said relevant geographic information of said mobile station via IP packet to said application server.

According to the fifth aspect of the present invention, a first locating apparatus for locating in a mobile station of PHS network is provided, comprising: a first sending means for sending a first location request via IP packet to a PHS location server, wherein, said first location request comprises PSEN of said mobile station and CSIDs of a plurality of cell sites surrounding said mobile station; a first receiving means for receiving a first location response via IP packet from said PHS location server, wherein, said first location response comprises relevant geographic information of said mobile station.

According to the sixth aspect of the present invention, a first assistant locating apparatus for assistant locating in a mobile station of PHS network is provided, comprising: a second receiving means for receiving a second location request via IP packet from a PHS location server; a second sending means for sending a second location response via IP packet to said PHS location server, wherein, said second location response comprises CSIDs of a plurality of cell sites surrounding said mobile station.

According to the seventh aspect of the present invention, a second locating apparatus for locating in a PHS location server of PHS network is provided, comprising: a third receiving means for receiving a first location request via IP packet from a mobile station, wherein, said first location request comprises PSEN of said mobile station and CSIDs of a plurality of cell sites surrounding said mobile station; a first obtaining means for obtaining relevant geographic information of said mobile station based on said CSIDs of a plurality of cell sites surrounding said mobile station in said first location request; a third sending means for sending a first location response via IP packet to said mobile station, wherein said first location response comprises said relevant geographic information of said mobile station.

According to the eighth aspect of the present invention, a second assistant locating apparatus for locating in a PHS location server of PHS network is provided, comprising: a fourth receiving means for receiving a location services request via IP packet retransmitted by an application server, wherein said location services request is used for requesting relevant geographic information of a mobile station; a fourth sending means for sending a second location request via IP packet to said mobile station; a fifth receiving means for receiving a second location response via IP packet from said mobile station, wherein, said second location response comprises CSIDs of a plurality of cell sites surrounding said mobile station; a third obtaining means for obtaining relevant geographic information of said mobile station based on said CSIDs of said cell sites surrounding said mobile station in said second location response; a fifth sending means for sending said relevant geographic information of said mobile station via IP packet to said application server.

In the present invention, the location services use PHS Packet IP connection without voice circuit occupation and more importantly, the present invention provides real time location services to all mobile stations (all PHS Packet subscribers). Base on this invention, the CSID and Geographic Information which includes but not limited to information of Longitude and Latitude will be transmitted upon PHS Packet IP connection from end to end. Moreover, the present invention could provide more attractive location based services (like real time tracing, navigation, etc.).

### BRIEF DESCRIPTION OF THE DRAWINGS

Fig. 1 is a schematic view of the existing location service based on PHS Short Message in PHS network;
Fig. 2 is a systematic flowchart of location service based on PHS Packet IP connection in PHS network according to the present invention;
Fig. 3 is a systematic flowchart of assistant location service based on PHS Packet IP connection in PHS network according to the present invention;
Fig. 4 is a flowchart of a method for locating in a mobile station of PHS network according to an embodiment of the present invention;
Fig. 5 is a flowchart of a method for assistant locating in a mobile station of PHS network according to an embodiment of the present invention;
Fig. 6 is a flowchart of a method for locating in a PHS location server of PHS network according to an embodiment of the present invention;
Fig. 7 is a flowchart of a method for assistant locating in a PHS location server of PHS network according to an embodiment of the present invention;
Fig. 8 is a block diagram of a first locating apparatus for locating in a mobile station of PHS network according to an embodiment of the present invention;
Fig. 9 is a block diagram of a first assistant locating apparatus for locating in a in a mobile station of PHS network according to an embodiment of the present invention;
Fig. 10 is a block diagram of a second locating apparatus for locating in a PHS location server of PHS network according to an embodiment of the present invention; and
Fig. 11 is a block diagram of a second assistant locating apparatus for locating in a PHS location server of PHS network according to an embodiment of the present invention.

### DETAILED DESCRIPTION OF PREFERRED EMBODIMENTS

Referring to the accompanying drawings, a detailed description will be given to the present invention in terms of embodiments. It should be understood that the present invention is not limited to the embodiments.

In the present invention, there are two kinds of locating methods (active locating method and passive locating method). As for the active locating method, the Mobile Station initiates the location request, and as for the passive locating method, the PHS Location Server receives location services request from an application server and then initiates the location request.

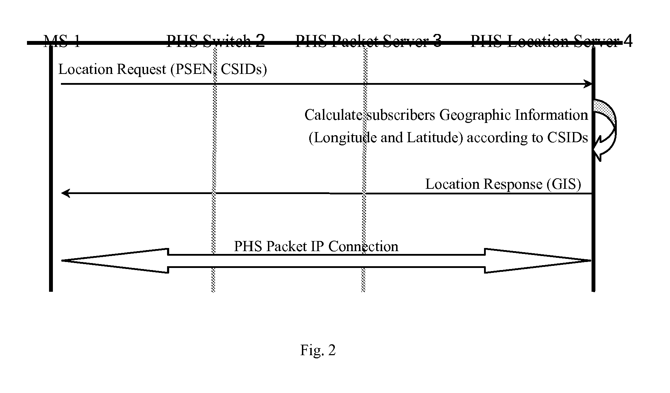

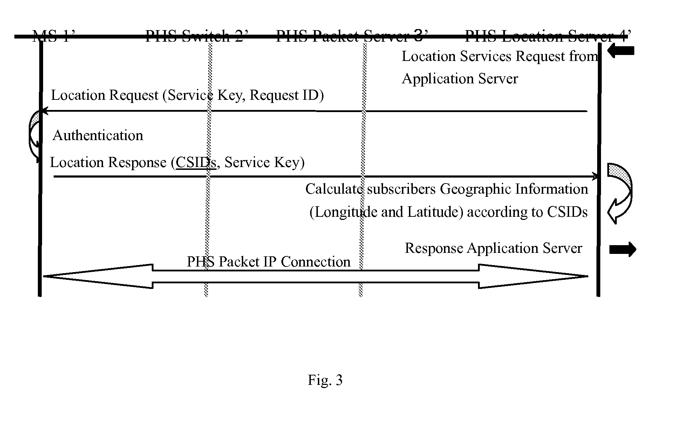

Hereinafter, referring to fig.2 and fig.3, above-mentioned two locating methods will be described in details.

### (A). Active locating method

Fig. 2 is a systematic flowchart of location service based on PHS Packet IP connection in PHS network according to the present invention.

As shown in fig. 2, the Mobile Station 1 sends a first location request via IP packet, such as encapsulated in IP packet, through PHS Switch 2 and PHS Packet Server 3 to the PHS Location Server 4.

The PHS Switch 2 and the PHS Packet Server 3 are transparent to the Mobile Station 1 and the PHS Location Server 4. The PHS Switch 2 indicates switching network which includes Switch and cell station system. The PHS Packet Server 3 is used to provide IP connection, which is equivalent to media gateway in network. Specifically, it is used to change the circuit switching used in the PHS Switch into packet switching.

The first location request comprises PSEN of the Mobile Station 1, CSIDs of a plurality of cell sites surrounding the Mobile Station 1.

The PSEN of the Mobile Station 1 in the first location request is used to notify the PHS Location Server 4 which Mobile Station the location response corresponding to the first location request should be sent to, and CSIDs of a plurality of cell sites surrounding the Mobile Station 1 in the first location request are indicators which can be used to calculate the geographic information of the Mobile Station 1 or the geographic information of certain place surrounding the Mobile Station 1.

Preferably, the first location request could comprises PSEN of the Mobile Station 1, CSIDs of a plurality of cell sites surrounding the Mobile Station 1, service key of the Mobile Station 1 and a plurality of signal intensity of the Mobile Station 1 respectively corresponding to the cell sites.

Wherein, a plurality of signal intensity of the Mobile Station 1 respectively corresponding to the cell sites are proportional to the distances between the Mobile Station 1 and a plurality of cell sites surrounding the Mobile Station 1 which are used by the PHS Location Server 4 to calculate the relevant geographic information of the Mobile Station 1 more accurately based on the geographic information of the cell sites surrounding the Mobile Station 1.

The service key of the Mobile Station 1 is used to inform the PHS Location Server 4 that which service the Mobile Station 1 needs. The service includes but not limited to tracing, navigation or locating of certain place.

After the Mobile Station 1 sends a first location request via IP packet to the PHS Location Server 4, the PHS Location Server 4 receives the first location request via IP packet from the Mobile Station 1 and retrieves the CSIDs of the cell sites surrounding the Mobile Station 1 from the first location request.

Then, the PHS Location Server 4 obtains the geographic information of the cell sites surrounding the Mobile Station 1 based on CSIDs of the cell sites surrounding the Mobile Station 1 and calculates the relevant geographic information of the Mobile Station 1 based on the geographic information of the cell sites surrounding the Mobile Station 1 according a predetermined arithmetic(such as mid-value method).

Wherein, the relevant geographic information comprises the geographic information of the Mobile Station 1 or the geographic information of certain place (such as cinema or restaurant) surrounding the Mobile Station 1.

After calculating the relevant geographic information of the Mobile Station 1, the PHS Location Server 4 sends a first location response via IP packet which comprises the relevant geographic information of the Mobile Station 1(the geographic information of the Mobile Station 1 or the geographic information of certain place surrounding the Mobile Station 1) to the Mobile Station 1.

Preferably, the first location response could comprise the relevant geographic information of the Mobile Station 1 and the service key of service key of the Mobile Station 1. We should understand that when the first location response comprises the service key of the Mobile Station 1, that means the first location request must comprise the service key of the Mobile Station 1.

Finally, the Mobile Station 1 receives the first location response via IP packet which comprises the relevant geographic information of the Mobile Station 1(the geographic information of the Mobile Station 1 or the geographic information of certain place surrounding the Mobile Station 1) from the PHS Location Server 4 and retrieves the geographic information of the Mobile Station 1 or the geographic information of certain place surrounding the Mobile Station 1 from the first location response.

### (B). Passive locating method

Fig. 3 is a systematic flowchart of assistant location service based on PHS

Packet IP connection in PHS network according to the present invention.

As shown in fig. 3, the PHS Location Server 4' receives a location services request via IP packet retransmitted by an application server, wherein, the location services request is used for requesting the relevant geographic information of the Mobile Station 1'.

After receiving the location services request via IP packet retransmitted by an application server, the PHS Location Server 4' sends a second location request via IP packet to the Mobile Station 1'.

After the PHS Location Server 4' sends a second location request via IP packet to the Mobile Station 1', the Mobile Station 1' receives the second location request via IP packet retransmitted by PHS Switch 2' and PHS Packet Server 3' respectively from the PHS Location Server 4'.

The PHS Switch 2' and the PHS Packet Server 3' are transparent to the Mobile Station 1' and the PHS Location Server 4'. The PHS Switch 2' indicates switching network which includes Switch and cell station system. The PHS Packet Server 3' is used to provide IP connection, which is equivalent to media gateway in network. Specifically, it is used to change the circuit switching used in the PHS Switch into packet switching.

Preferably, the second location request could comprise service key of the

PHS Location Server 4'.

More preferably, the second location request could further comprise Request ID of the location services requester.

Hereinafter, the following steps that the Mobile Station 1' will perform according to the two circumstances (one is the second location request doesn't comprise Request ID of the location services requester and the other is the second location request comprises Request ID of the location services requester) will be described respectively.

### (a). the circumstance of the second location request not comprising Request ID of the location services requester

If the second location request doesn't comprise Request ID of the location services requester, the Mobile Station 1' directly sends a second location response to the PHS Location Server 4' according to the second location request without authenticating the location services requester.

### (b). the circumstance of the second location request comprising Request ID of the location services requester

If the second location request comprises Request ID of the location services requester, the Mobile Station 1' retrieves the Request ID of the location services requester from the second location request and then authenticates the location services requester according to the Request ID of the location services requester.

In an embodiment, the Mobile Station 1' could comprise a database which stores Request IDs of all the authorized location services requesters. After the Mobile Station 1' retrieves the Request ID of the location services requester from the second location request, it compares the Request ID of the location services requester with all the authorized Request IDs stored in the database to determine whether the location services requester is an authorized requester.

If the authentication for the location services requester is successful(that means the location services requester is an authorized requester), the Mobile Station 1' will send a second location response via IP packet to the PHS Location Server 4'.

The second location response comprises CSIDs of a plurality of cell sites surrounding the Mobile Station 1'.

The CSIDs of a plurality of cell sites surrounding the Mobile Station 1' in the second location response are indicators which can be used to calculate the geographic information of the Mobile Station 1' or the geographic information of certain place surrounding the Mobile Station 1' by the PHS Location Server 4'.

Preferably, the second location response could comprise service key of the PHS Location Server 4' and a plurality of signal intensity of the Mobile Station 1' respectively corresponding to the cell sites. We should understand that when the first location response comprises the service key of the PHS Location Server 4', that means the first location request must comprise the service key of the PHS Location Server 4'.

A plurality of signal intensity of the Mobile Station 1' respectively corresponding to the cell sites are respectively proportional to the distances between the Mobile Station 1' and a plurality of cell sites surrounding the Mobile Station 1' which are used by the PHS Location Server 4' to calculate the relevant geographic information of the Mobile Station 1' more accurately based on the geographic information of the cell sites surrounding the Mobile Station 1'.

Then, the PHS Location Server 4' receives the second location response via IP packet from the Mobile Station 1' and retrieves CSIDs of the cell sites surrounding the Mobile Station 1' from the second location request. After retrieving CSIDs of the cell sites surrounding the Mobile Station 1' from the second location request, the PHS Location Server 4' obtains the geographic information of the cell sites surrounding the Mobile Station 1' based on CSIDs of the cell sites surrounding the Mobile Station 1' and calculates the relevant geographic information of the Mobile Station 1' based on the geographic information of the cell sites surrounding the Mobile Station 1' according a predetermined arithmetic(such as mid-value method).

Wherein, the relevant geographic information comprises the geographic information of the Mobile Station 1' or the geographic information of certain place (such as cinema or restaurant) surrounding the Mobile Station 1'.

After calculating the relevant geographic information of the Mobile Station 1', the PHS Location Server 4' sends the relevant geographic information of the Mobile Station 1' (the geographic information of the Mobile Station 1' or the geographic information of certain place surrounding the Mobile Station 1') via IP packet to the application server.

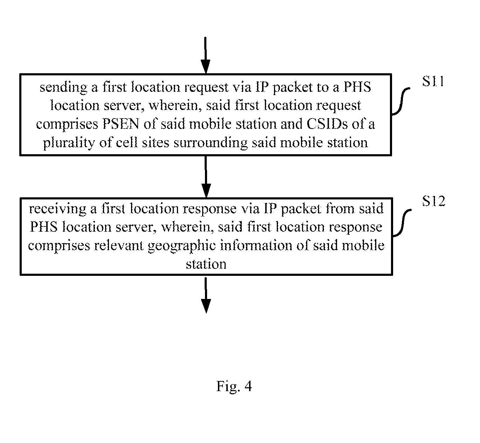

Hereinafter, referring to fig. 4, a detailed description will be given to the first aspect of the present invention according to fig. 2.

Fig. 4 is a flowchart of a method for locating in a mobile station of PHS network according to an embodiment of the present invention.

As shown in Fig. 4, in step S11, the Mobile Station 1 sends a first location request via IP packet, such as encapsulated in IP packet, through PHS Switch 2 and PHS Packet Server 3 to the PHS Location Server 4.

The PHS Switch 2 and the PHS Packet Server 3 are transparent to the Mobile Station 1 and the PHS Location Server 4. The PHS Switch 2 indicates switching network which includes Switch and cell station system. The PHS Packet Server 3 is used to provide IP connection, which is equivalent to media gateway in network. Specifically, it is used to change the circuit switching used in the PHS Switch into packet switching.

The first location request comprises PSEN of the Mobile Station 1, CSIDs of a plurality of cell sites surrounding the Mobile Station 1.

The PSEN of the Mobile Station 1 in the first location request is used to notify the PHS Location Server 4 which Mobile Station the location response corresponding to the first location request should be sent to, and CSIDs of a plurality of cell sites surrounding the Mobile Station 1 in the first location request are indicators which can be used to calculate the geographic information of the Mobile Station 1 or the geographic information of certain place surrounding the Mobile Station 1.

Preferably, the first location request could comprises PSEN of the Mobile Station 1, CSIDs of a plurality of cell sites surrounding the Mobile Station 1, service key of the Mobile Station 1 and a plurality of signal intensity of the Mobile Station 1 respectively corresponding to the cell sites.

Wherein, a plurality of signal intensity of the Mobile Station 1 respectively corresponding to the cell sites are proportional to the distances between the Mobile Station 1 and a plurality of cell sites surrounding the Mobile Station 1 which are used by the PHS Location Server 4 to calculate the relevant geographic information of the Mobile Station 1 more accurately based on the geographic information of the cell sites surrounding the Mobile Station 1.

The service key of the Mobile Station 1 is used to inform the PHS Location Server 4 that which service the Mobile Station 1 needs. The service includes but not limited to tracing, navigation or locating of certain place.

After the Mobile Station 1 sends a first location request via IP packet to the PHS Location Server 4, The PHS Location Server 4 receives the first location request via IP packet from the Mobile Station 1 and retrieves the CSIDs of the cell sites surrounding the Mobile Station 1 from the first location request.

Then, the PHS Location Server 4 obtains the geographic information of the cell sites surrounding the Mobile Station 1 based on CSIDs of the cell sites surrounding the Mobile Station 1 and calculates the relevant geographic information of the Mobile Station 1 based on the geographic information of the cell sites surrounding the Mobile Station 1 according a predetermined arithmetic(such as mid-value method).

Wherein, the relevant geographic information comprises the geographic information of the Mobile Station 1 or the geographic information of certain place (such as cinema or restaurant) surrounding the Mobile Station 1.

After obtaining the geographic information of the Mobile Station 1 or the geographic information of certain place (such as cinema or restaurant) surrounding the Mobile Station 1, the PHS Location Server 4 sends a first location response via IP packet which comprises the geographic information of the Mobile Station 1 or the geographic information of certain place (such as cinema or restaurant) surrounding the Mobile Station 1 to the Mobile Station 1.

Preferably, the first location response could comprise the relevant geographic information of the Mobile Station 1 and the service key of service key of the Mobile Station 1. We should understand that when the first location response comprises the service key of the Mobile Station 1, that means the first location request must comprise the service key of the Mobile Station 1.

If the service key indicates that Mobile Station 1 needs its own geographical information, PHS Location Server 4 calculates the geographic information of the Mobile Station 1 based on the geographic information of the cell sites surrounding the Mobile Station 1 and directly sends the geographic information of the Mobile Station 1 to the Mobile Station 1 by the first location response via IP packet.

In addition, if the service key indicates that Mobile Station 1 needs the geographic information of certain place surrounding it, PHS Location Server 4 firstly calculates the geographic information of the Mobile Station 1 based on the geographic information of the cell sites surrounding the Mobile Station 1 and then calculates the geographic information of certain place surrounding the Mobile Station 1 according to the geographic information of the Mobile Station 1. After calculating the geographic information of certain place surrounding the Mobile Station 1, the PHS Location Server 4 sends it to the Mobile Station 1 by the first location response via IP packet.

Then, in step S12, the Mobile Station 1 receives the first location response via IP packet which comprises the geographic information of the Mobile Station 1 or the geographic information of certain place surrounding the Mobile Station 1 from the PHS Location Server 4 and retrieves the geographic information of the Mobile Station 1 or the geographic information of certain place surrounding the Mobile Station 1 from the first location response.

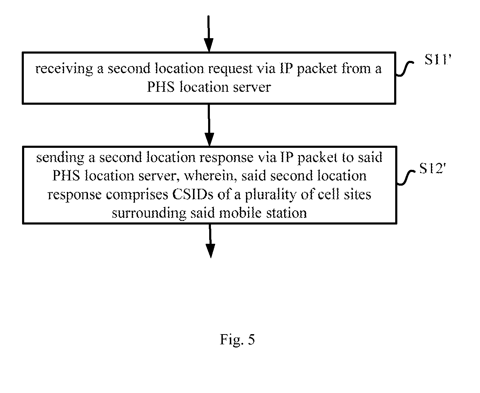

Hereinafter, referring to fig. 5, a detailed description will be given to the first aspect of the present invention according to fig. 3.

Fig. 5 is a flowchart of a method for assistant locating in a mobile station of PHS network according to an embodiment of the present invention.

As shown in Fig. 5, firstly, the Mobile Station 1'receives a second location request via IP packet from a PHS location server in step S11';

Secondly, the Mobile Station 1' sends a second location response via IP packet to said PHS location server in step S12'.

Specifically , the PHS Location Server 4' receives a location services request via IP packet retransmitted by an application server, wherein, the location services request is used for requesting the relevant geographic information of the Mobile Station 1'. Then, the PHS Location Server 4' sends a second location request via IP packet to the Mobile Station 1'.

After the PHS Location Server 4' sends a second location request via IP packet to the Mobile Station 1', in the step 11', the Mobile Station 1' receives the second location request via IP packet retransmitted by PHS Switch 2' and PHS Packet Server 3' respectively from the PHS Location Server 4'.

The PHS Switch 2' and the PHS Packet Server 3' are transparent to the

Mobile Station 1' and the PHS Location Server 4'. The PHS Switch 2' indicates switching network which includes Switch and cell station system. The PHS Packet Server 3' is used to provide IP connection, which is equivalent to media gateway in network. Specifically, it is used to change the circuit switching used in the PHS Switch into packet switching.

Preferably, the second location request could comprise service key of the PHS Location Server 4'.

More preferably, the second location request could further comprise Request ID of the location services requester.

Hereinafter, the following steps that the Mobile Station 1' will perform according to the two circumstances (one is the second location request doesn't comprise Request ID of the location services requester and the other is the second location request comprises Request ID of the location services requester) will be described respectively.

### (i). the circumstance of the second location request not comprising Request ID of the location services requester

If the second location request doesn't comprise Request ID of the location services requester, in the step S12', the Mobile Station 1' directly sends a second location response via IP packet to the PHS Location Server 4' according to the second location request without authenticating the location services requester.

### (ii). the circumstance of the second location request comprising Request ID of the location services requester

If the second location request comprises Request ID of the location services requester, the Mobile Station 1' retrieves the Request ID of the location services requester from the second location request and then authenticates the location services requester according to the Request ID of the location services requester.

In an embodiment, the Mobile Station 1' could comprise a database which stores Request IDs of all the authorized location services requesters. After the Mobile Station 1' retrieves the Request ID of the location services requester from the second location request, it compares the Request ID of the location services requester with all the authorized Request IDs stored in the database to determine whether the location services requester is an authorized requester.

If the authentication for the location services requester is successful(that means the location services requester is an authorized requester), in the step S12', the Mobile Station 1' will send a second location response via IP packet to the PHS Location Server 4'.

The second location response comprises CSIDs of a plurality of cell sites surrounding the Mobile Station 1'.

The CSIDs of a plurality of cell sites surrounding the Mobile Station 1' in the second location response are indicators which can be used to calculate the geographic information of the Mobile Station 1' or the geographic information of certain place surrounding the Mobile Station 1' by the PHS Location Server 4'.

Preferably, the second location response could comprise service key of the PHS Location Server 4' and a plurality of signal intensity of the Mobile Station 1' respectively corresponding to the cell sites. We should understand that when the first location response comprises the service key of the PHS Location Server 4', that means the first location request must comprise the service key of the PHS Location Server 4'.

A plurality of signal intensity of the Mobile Station 1' respectively corresponding to the cell sites are respectively proportional to the distances between the Mobile Station 1' and a plurality of cell sites surrounding the Mobile Station 1' which are used by the PHS Location Server 4' to calculate the relevant geographic information of the Mobile Station 1' more accurately based on the geographic information of the cell sites surrounding the Mobile Station 1'.

Then, the PHS Location Server 4' receives the second location response via IP packet from the Mobile Station 1' and retrieves CSIDs of the cell sites surrounding the Mobile Station 1' from the second location request. After retrieving CSIDs of the cell sites surrounding the Mobile Station 1' from the second location request, the PHS Location Server 4' obtains the geographic information of the cell sites surrounding the Mobile Station 1' based on CSIDs of the cell sites surrounding the Mobile Station 1' and calculates the relevant geographic information of the Mobile Station 1' based on the geographic information of the cell sites surrounding the Mobile Station 1' according a predetermined arithmetic(such as mid-value method).

Wherein, the relevant geographic information comprises the geographic information of the Mobile Station 1' or the geographic information of certain place

(such as cinema or restaurant) surrounding the Mobile Station 1'.

After calculating the relevant geographic information of the Mobile Station 1', the PHS Location Server 4' sends the relevant geographic information of the Mobile Station 1' (the geographic information of the Mobile Station 1' or the geographic information of certain place surrounding the Mobile Station 1') via IP packet to the application server.

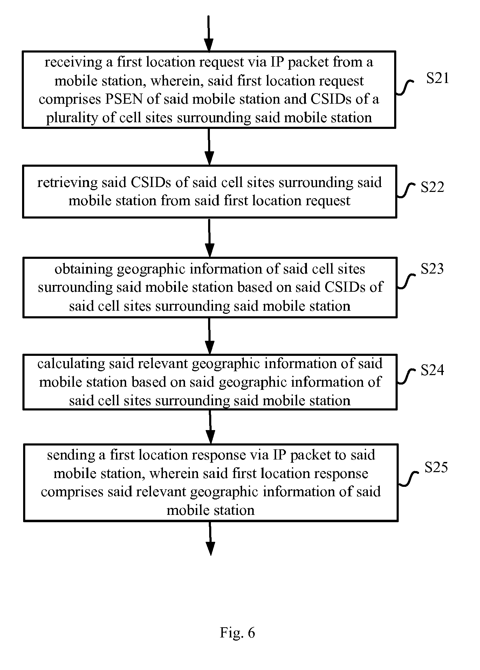

Hereinafter, referring to fig. 6, a detailed description will be given to the first aspect of the present invention according to fig. 2.

Fig. 6 is a flowchart of a method for locating in a PHS location server of PHS network according to an embodiment of the present invention.

As shown in fig. 6, the Mobile Station 1 sends a first location request via IP packet, such as encapsulated in IP packet, through PHS Switch 2 and PHS Packet Server 3 to the PHS Location Server 4.

The PHS Switch 2 and the PHS Packet Server 3 are transparent to the Mobile Station 1 and the PHS Location Server 4. The PHS Switch 2 indicates switching network which includes Switch and cell station system. The PHS Packet Server 3 is used to provide IP connection, which is equivalent to media gateway in network. Specifically, it is used to change the circuit switching used in the PHS Switch into packet switching.

After the Mobile Station 1 sends a first location request via IP packet to the PHS Location Server 4, in the step S21, the PHS Location Server 4 receives the first location request via IP packet from the Mobile Station 1.

The first location request comprises PSEN of the Mobile Station 1, CSIDs of a plurality of cell sites surrounding the Mobile Station 1.

The PSEN of the Mobile Station 1 in the first location request is used to notify the PHS Location Server 4 which Mobile Station the location response corresponding to the first location request should be sent to, and CSIDs of a plurality of cell sites surrounding the Mobile Station 1 in the first location request are indicators which can be used to calculate the geographic information of the Mobile Station 1 or the geographic information of certain place surrounding the Mobile Station 1.

Preferably, the first location request could comprises PSEN of the Mobile

Station 1, CSIDs of a plurality of cell sites surrounding the Mobile Station 1, service key of the Mobile Station 1 and a plurality of signal intensity of the Mobile Station 1 respectively corresponding to the cell sites.

Wherein, a plurality of signal intensity of the Mobile Station 1 respectively corresponding to the cell sites are proportional to the distances between the Mobile Station 1 and a plurality of cell sites surrounding the Mobile Station 1 which are used by the PHS Location Server 4 to calculate the relevant geographic information of the Mobile Station 1 more accurately based on the geographic information of the cell sites surrounding the Mobile Station 1.

The service key of the Mobile Station 1 is used to inform the PHS Location Server 4 that which service the Mobile Station 1 needs. The service includes but not limited to tracing, navigation or locating of certain place.

In the step S22, the PHS Location Server 4 retrieves the CSIDs of the cell sites surrounding the Mobile Station 1 from the first location request.

After retrieving the CSIDs of the cell sites surrounding the Mobile Station 1 from the first location request, in the step S23, the PHS Location Server 4 obtains the geographic information of the cell sites surrounding the Mobile Station 1 based on CSIDs of the cell sites surrounding the Mobile Station 1.

Then, in the step S24, the PHS Location Server 4 calculates the relevant geographic information of the Mobile Station 1 based on the geographic information of the cell sites surrounding the Mobile Station 1 according a predetermined arithmetic(such as mid-value method).

Wherein, the relevant geographic information comprises the geographic information of the Mobile Station 1 or the geographic information of certain place (such as cinema or restaurant) surrounding the Mobile Station 1.

After calculating the relevant geographic information of the Mobile Station 1, in the step S25, the PHS Location Server 4 sends a first location response via IP packet which comprises the relevant geographic information of the Mobile Station 1(the geographic information of the Mobile Station 1 or the geographic information of certain place surrounding the Mobile Station 1) to the Mobile Station 1.

Preferably, the first location response could comprise the relevant geographic information of the Mobile Station 1 and the service key of service key of the Mobile Station 1. We should understand that when the first location response comprises the service key of the Mobile Station 1, that means the first location request must comprise the service key of the Mobile Station 1.

Finally, the Mobile Station 1 receives the first location response via IP packet which comprises the relevant geographic information of the Mobile Station 1(the geographic information of the Mobile Station 1 or the geographic information of certain place surrounding the Mobile Station 1) from the PHS Location Server 4 and retrieves the geographic information of the Mobile Station 1 or the geographic information of certain place surrounding the Mobile Station 1 from the first location response.

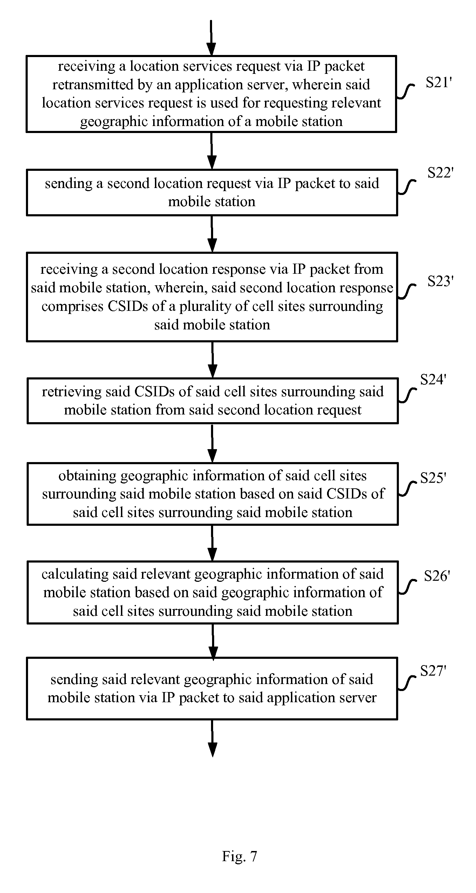

Hereinafter, referring to fig. 7, a detailed description will be given to the first aspect of the present invention according to fig. 3.

Fig. 7 is a flowchart of a method for assistant locating in a PHS location server of PHS network according to an embodiment of the present invention.

As shown in fig. 7, in the step S21', the PHS Location Server 4' receives a location services request via IP packet retransmitted by an application server, wherein, the location services request is used for requesting the relevant geographic information of the Mobile Station 1'.

After receiving the location services request via IP packet retransmitted by an application server, in the step S22', the PHS Location Server 4' sends a second location request via IP packet to the Mobile Station 1'.

After the PHS Location Server 4' sends a second location request via IP packet to the Mobile Station 1', the Mobile Station 1' receives the second location request via IP packet retransmitted by PHS Switch 2' and PHS Packet Server 3' respectively from the PHS Location Server 4'.

The PHS Switch 2' and the PHS Packet Server 3' are transparent to the Mobile Station 1' and the PHS Location Server 4'. The PHS Switch 2' indicates switching network which includes Switch and cell station system. The PHS Packet Server 3' is used to provide IP connection, which is equivalent to media gateway in network. Specifically, it is used to change the circuit switching used in the PHS Switch into packet switching.

Preferably, the second location request could comprise service key of the

PHS Location Server 4'.

More preferably, the second location request could further comprise Request ID of the location services requester.

Hereinafter, the following steps that the Mobile Station 1' will perform according to the two circumstances (one is the second location request doesn't comprise Request ID of the location services requester and the other is the second location request comprises Request ID of the location services requester) will be described respectively.

### (I). the circumstance of the second location request not comprising Request ID of the location services requester

If the second location request doesn't comprise Request ID of the location services requester, the Mobile Station 1' directly sends a second location response to the PHS Location Server 4' according to the second location request without authenticating the location services requester.

### (II). the circumstance of the second location request comprising Request ID of the location services requester

If the second location request comprises Request ID of the location services requester, the Mobile Station 1' retrieves the Request ID of the location services requester from the second location request and then authenticates the location services requester according to the Request ID of the location services requester.

In an embodiment, the Mobile Station 1' could comprise a database which stores Request IDs of all the authorized location services requesters. After the Mobile Station 1' retrieves the Request ID of the location services requester from the second location request, it compares the Request ID of the location services requester with all the authorized Request IDs stored in the database to determine whether the location services requester is an authorized requester.

If the authentication for the location services requester is successful(that means the location services requester is an authorized requester), the Mobile Station 1' will send a second location response via IP packet to the PHS Location Server 4'.

Then, in the step S23', the PHS Location Server 4' receives the second location response via IP packet from the Mobile Station 1'.

The second location response comprises CSIDs of a plurality of cell sites surrounding the Mobile Station 1'.

The CSIDs of a plurality of cell sites surrounding the Mobile Station 1' in the second location response are indicators which can be used to calculate the geographic information of the Mobile Station 1' or the geographic information of certain place surrounding the Mobile Station 1' by the PHS Location Server 4'.

Preferably, the second location response could comprise service key of the PHS Location Server 4' and a plurality of signal intensity of the Mobile Station 1' respectively corresponding to the cell sites. We should understand that when the first location response comprises the service key of the PHS Location Server 4', that means the first location request must comprise the service key of the PHS Location Server 4'.

A plurality of signal intensity of the Mobile Station 1' respectively corresponding to the cell sites are respectively proportional to the distances between the Mobile Station 1' and a plurality of cell sites surrounding the Mobile Station 1' which are used by the PHS Location Server 4' to calculate the relevant geographic information of the Mobile Station 1' more accurately based on the geographic information of the cell sites surrounding the Mobile Station 1'.

Then, in the step S24', the PHS Location Server 4' retrieves CSIDs of the cell sites surrounding the Mobile Station 1' from the second location request.

After retrieving CSIDs of the cell sites surrounding the Mobile Station 1' from the second location request, in the step S25', the PHS Location Server 4' obtains the geographic information of the cell sites surrounding the Mobile Station 1' based on CSIDs of the cell sites surrounding the Mobile Station 1'.

Then, in the step S26', the PHS Location Server 4' calculates the relevant geographic information of the Mobile Station 1' based on the geographic information of the cell sites surrounding the Mobile Station 1' according a predetermined arithmetic(such as mid-value method).

Wherein, the relevant geographic information comprises the geographic information of the Mobile Station 1' or the geographic information of certain place (such as cinema or restaurant) surrounding the Mobile Station 1'.

After calculating the relevant geographic information of the Mobile Station 1', in the step S27', the PHS Location Server 4' sends the relevant geographic information of the Mobile Station 1' (the geographic information of the Mobile Station 1' or the geographic information of certain place surrounding the Mobile Station 1') via IP packet to the application server.

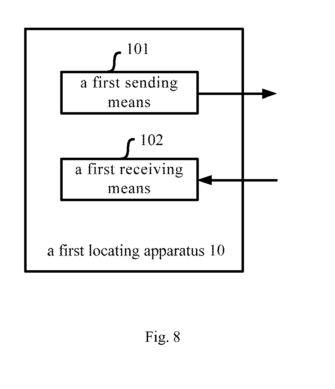

Hereinafter, referring to fig. 8, a detailed description will be given to the first aspect of the present invention according to fig. 2.

Fig. 8 is a block diagram of a first locating apparatus for locating in a mobile station of PHS network according to an embodiment of the present invention.

The first locating apparatus 10 comprises a first sending means 101 and a first receiving means 102.

As shown in Fig. 8, the first sending means 101 is used for sending a first location request via IP packet, such as encapsulated in IP packet, through PHS Switch 2 and PHS Packet Server 3 to the PHS Location Server 4.

The PHS Switch 2 and the PHS Packet Server 3 are transparent to the Mobile Station 1 and the PHS Location Server 4. The PHS Switch 2 indicates switching network which includes Switch and cell station system. The PHS Packet Server 3 is used to provide IP connection, which is equivalent to media gateway in network. Specifically, it is used to change the circuit switching used in the PHS Switch into packet switching.

The first location request comprises PSEN of the Mobile Station 1, CSIDs of a plurality of cell sites surrounding the Mobile Station 1.

The PSEN of the Mobile Station 1 in the first location request is used to notify the PHS Location Server 4 which Mobile Station the location response corresponding to the first location request should be sent to, and CSIDs of a plurality of cell sites surrounding the Mobile Station 1 in the first location request are indicators which can be used to calculate the geographic information of the Mobile Station 1 or the geographic information of certain place surrounding the Mobile Station 1.

Preferably, the first location request could comprises PSEN of the Mobile Station 1, CSIDs of a plurality of cell sites surrounding the Mobile Station 1, service key of the Mobile Station 1 and a plurality of signal intensity of the Mobile Station 1 respectively corresponding to the cell sites.

Wherein, a plurality of signal intensity of the Mobile Station 1 respectively corresponding to the cell sites are proportional to the distances between the Mobile Station 1 and a plurality of cell sites surrounding the Mobile Station 1 which are used by the PHS Location Server 4 to calculate the relevant geographic information of the Mobile Station 1 more accurately based on the geographic information of the cell sites surrounding the Mobile Station 1.

The service key of the Mobile Station 1 is used to inform the PHS Location Server 4 that which service the Mobile Station 1 needs. The service includes but not limited to tracing, navigation or locating of certain place.

After the Mobile Station 1 sends a first location request via IP packet to the PHS Location Server 4, The PHS Location Server 4 receives the first location request via IP packet from the Mobile Station 1 and retrieves the CSIDs of the cell sites surrounding the Mobile Station 1 from the first location request.

Then, the PHS Location Server 4 obtains the geographic information of the cell sites surrounding the Mobile Station 1 based on CSIDs of the cell sites surrounding the Mobile Station 1 and calculates the relevant geographic information of the Mobile Station 1 based on the geographic information of the cell sites surrounding the Mobile Station 1 according a predetermined arithmetic(such as mid-value method).

Wherein, the relevant geographic information comprises the geographic information of the Mobile Station 1 or the geographic information of certain place (such as cinema or restaurant) surrounding the Mobile Station 1.

After obtaining the geographic information of the Mobile Station 1 or the geographic information of certain place (such as cinema or restaurant) surrounding the Mobile Station 1, the PHS Location Server 4 sends a first location response via IP packet which comprises the geographic information of the Mobile Station 1 or the geographic information of certain place (such as cinema or restaurant) surrounding the Mobile Station 1 to the Mobile Station 1.

Preferably, the first location response could comprise the relevant geographic information of the Mobile Station 1 and the service key of service key of the Mobile Station 1. We should understand that when the first location response comprises the service key of the Mobile Station 1, that means the first location request must comprise the service key of the Mobile Station 1.

If the service key indicates that Mobile Station 1 needs its own geographical information, PHS Location Server 4 calculates the geographic information of the Mobile Station 1 based on the geographic information of the cell sites surrounding the Mobile Station 1 and directly sends the geographic information of the Mobile Station 1 to the Mobile Station 1 by the first location response via IP packet.

In addition, if the service key indicates that Mobile Station 1 needs the geographic information of certain place surrounding it, PHS Location Server 4 firstly calculates the geographic information of the Mobile Station 1 based on the geographic information of the cell sites surrounding the Mobile Station 1 and then calculates the geographic information of certain place surrounding the Mobile Station 1 according to the geographic information of the Mobile Station 1. After calculating the geographic information of certain place surrounding the Mobile Station 1, the PHS Location Server 4 sends it to the Mobile Station 1 by the first location response via IP packet.

The first receiving means 102 is used for receiving the first location response via IP packet which comprises the geographic information of the Mobile Station 1 or the geographic information of certain place surrounding the Mobile Station 1 from the PHS Location Server 4 and retrieves the geographic information of the Mobile Station 1 or the geographic information of certain place surrounding the Mobile Station 1 from the first location response.

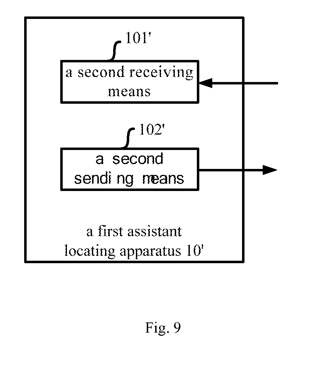

Hereinafter, referring to fig. 9, a detailed description will be given to the first aspect of the present invention according to fig. 3.

Fig. 9 is a block diagram of a first assistant locating apparatus for locating in a in a mobile station of PHS network according to an embodiment of the present invention.

The first assistant locating apparatus 10'comprises a second receiving means 101' and a second sending means 102'.

As shown in Fig. 9, the PHS Location Server 4' receives a location services request via IP packet retransmitted by an application server, wherein, the location services request is used for requesting the relevant geographic information of the Mobile Station 1'. Then, the PHS Location Server 4' sends a second location request via IP packet to the Mobile Station 1'.

The second receiving means 101'is used for receiving the second location request via IP packet retransmitted by PHS Switch 2' and PHS Packet Server 3' respectively from the PHS Location Server 4'.

The PHS Switch 2' and the PHS Packet Server 3' are transparent to the Mobile Station 1' and the PHS Location Server 4'. The PHS Switch 2' indicates switching network which includes Switch and cell station system. The PHS Packet Server 3' is used to provide IP connection, which is equivalent to media gateway in network. Specifically, it is used to change the circuit switching used in the PHS Switch into packet switching.

Preferably, the second location request could comprise service key of the PHS Location Server 4'.

More preferably, the second location request could further comprise Request ID of the location services requester.

Hereinafter, the following steps that the Mobile Station 1' will perform according to the two circumstances (one is the second location request doesn't comprise Request ID of the location services requester and the other is the second location request comprises Request ID of the location services requester) will be described respectively.

### (m). the circumstance of the second location request not comprising Request ID of the location services requester

If the second location request doesn't comprise Request ID of the location services requester, the second sending means 102' is used for directly sending a second location response via IP packet to the PHS Location Server 4' according to the second location request without authenticating the location services requester.

### (n). the circumstance of the second location request comprising Request ID of the location services requester

If the second location request comprises Request ID of the location services requester, the Mobile Station 1' retrieves the Request ID of the location services requester from the second location request and then authenticates the location services requester according to the Request ID of the location services requester.

In an embodiment, the Mobile Station 1' could comprise a database which stores Request IDs of all the authorized location services requesters. After the Mobile Station 1' retrieves the Request ID of the location services requester from the second location request, it compares the Request ID of the location services requester with all the authorized Request IDs stored in the database to determine whether the location services requester is an authorized requester.

If the authentication for the location services requester is successful(that means the location services requester is an authorized requester), the second sending means 102' is used for sending a second location response via IP packet to the PHS Location Server 4'.

The second location response comprises CSIDs of a plurality of cell sites surrounding the Mobile Station 1'.

The CSIDs of a plurality of cell sites surrounding the Mobile Station 1' in the second location response are indicators which can be used to calculate the geographic information of the Mobile Station 1' or the geographic information of certain place surrounding the Mobile Station 1' by the PHS Location Server 4'.

Preferably, the second location response could comprise service key of the PHS Location Server 4' and a plurality of signal intensity of the Mobile Station 1' respectively corresponding to the cell sites. We should understand that when the first location response comprises the service key of the PHS Location Server 4', that means the first location request must comprise the service key of the PHS Location Server 4'.

A plurality of signal intensity of the Mobile Station 1' respectively corresponding to the cell sites are respectively proportional to the distances between the Mobile Station 1' and a plurality of cell sites surrounding the Mobile Station 1' which are used by the PHS Location Server 4' to calculate the relevant geographic information of the Mobile Station 1' more accurately based on the geographic information of the cell sites surrounding the Mobile Station 1'.

Then, the PHS Location Server 4' receives the second location response via IP packet from the Mobile Station 1' and retrieves CSIDs of the cell sites surrounding the Mobile Station 1' from the second location request. After retrieving CSIDs of the cell sites surrounding the Mobile Station 1' from the second location request, the PHS Location Server 4' obtains the geographic information of the cell sites surrounding the Mobile Station 1' based on CSIDs of the cell sites surrounding the Mobile Station 1' and calculates the relevant geographic information of the Mobile Station 1' based on the geographic information of the cell sites surrounding the Mobile Station 1' according a predetermined arithmetic(such as mid-value method).

Wherein, the relevant geographic information comprises the geographic information of the Mobile Station 1' or the geographic information of certain place (such as cinema or restaurant) surrounding the Mobile Station 1'.

After calculating the relevant geographic information of the Mobile Station 1', the PHS Location Server 4' sends the relevant geographic information of the Mobile Station 1' (the geographic information of the Mobile Station 1' or the geographic information of certain place surrounding the Mobile Station 1') via IP packet to the application server.

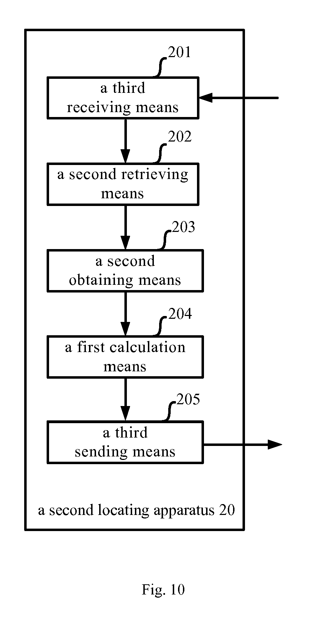

Hereinafter, referring to fig. 10, a detailed description will be given to the first aspect of the present invention according to fig. 2.

Fig. 10 is a block diagram of a second locating apparatus for locating in a PHS location server of PHS network according to an embodiment of the present invention.

The second locating apparatus 20 comprises a third receiving means 201, a second retrieving means 202, a second obtaining means203, a first calculating means 204 and a third sending means 205.

As shown in fig. 10, the Mobile Station 1 sends a first location request via IP packet, such as encapsulated in IP packet, through PHS Switch 2 and PHS Packet Server 3 to the PHS Location Server 4.

The PHS Switch 2 and the PHS Packet Server 3 are transparent to the Mobile Station 1 and the PHS Location Server 4. The PHS Switch 2 indicates switching network which includes Switch and cell station system. The PHS Packet Server 3 is used to provide IP connection, which is equivalent to media gateway in network. Specifically, it is used to change the circuit switching used in the PHS Switch into packet switching.

After the Mobile Station 1 sends a first location request via IP packet to the PHS Location Server 4, the third receiving means 201 is used for receiving the first location request via IP packet from the Mobile Station 1.

The first location request comprises PSEN of the Mobile Station 1, CSIDs of a plurality of cell sites surrounding the Mobile Station 1.

The PSEN of the Mobile Station 1 in the first location request is used to notify the PHS Location Server 4 which Mobile Station the location response corresponding to the first location request should be sent to, and CSIDs of a plurality of cell sites surrounding the Mobile Station 1 in the first location request are indicators which can be used to calculate the geographic information of the Mobile Station 1 or the geographic information of certain place surrounding the Mobile Station 1.

Preferably, the first location request could comprises PSEN of the Mobile Station 1, CSIDs of a plurality of cell sites surrounding the Mobile Station 1, service key of the Mobile Station 1 and a plurality of signal intensity of the Mobile Station 1 respectively corresponding to the cell sites.

Wherein, a plurality of signal intensity of the Mobile Station 1 respectively corresponding to the cell sites are proportional to the distances between the Mobile Station 1 and a plurality of cell sites surrounding the Mobile Station 1 which are used by the PHS Location Server 4 to calculate the relevant geographic information of the Mobile Station 1 more accurately based on the geographic information of the cell sites surrounding the Mobile Station 1.

The service key of the Mobile Station 1 is used to inform the PHS Location Server 4 that which service the Mobile Station 1 needs. The service includes but not limited to tracing, navigation or locating of certain place.

The second retrieving means 202 is used for retrieving the CSIDs of the cell sites surrounding the Mobile Station 1 from the first location request.

After retrieving the CSIDs of the cell sites surrounding the Mobile Station 1 from the first location request, the second obtaining means 203 is used for obtaining the geographic information of the cell sites surrounding the Mobile Station 1 based on CSIDs of the cell sites surrounding the Mobile Station 1.

Then, the first calculating means 204 is used for calculating the relevant geographic information of the Mobile Station 1 based on the geographic information of the cell sites surrounding the Mobile Station 1 according a predetermined arithmetic(such as mid-value method).

Wherein, the relevant geographic information comprises the geographic information of the Mobile Station 1 or the geographic information of certain place (such as cinema or restaurant) surrounding the Mobile Station 1.

After calculating the relevant geographic information of the Mobile

Station 1, the third sending means 205 is used for sending a first location response via IP packet which comprises the relevant geographic information of the Mobile Station 1(the geographic information of the Mobile Station 1 or the geographic information of certain place surrounding the Mobile Station 1) to the Mobile Station 1.

Preferably, the first location response could comprise the relevant geographic information of the Mobile Station 1 and the service key of service key of the Mobile Station 1. We should understand that when the first location response comprises the service key of the Mobile Station 1, that means the first location request must comprise the service key of the Mobile Station 1.

Finally, the Mobile Station 1 receives the first location response via IP packet which comprises the relevant geographic information of the Mobile Station 1 (the geographic information of the Mobile Station 1 or the geographic information of certain place surrounding the Mobile Station 1) from the PHS Location Server 4 and retrieves the geographic information of the Mobile Station 1 or the geographic information of certain place surrounding the Mobile Station 1 from the first location response.

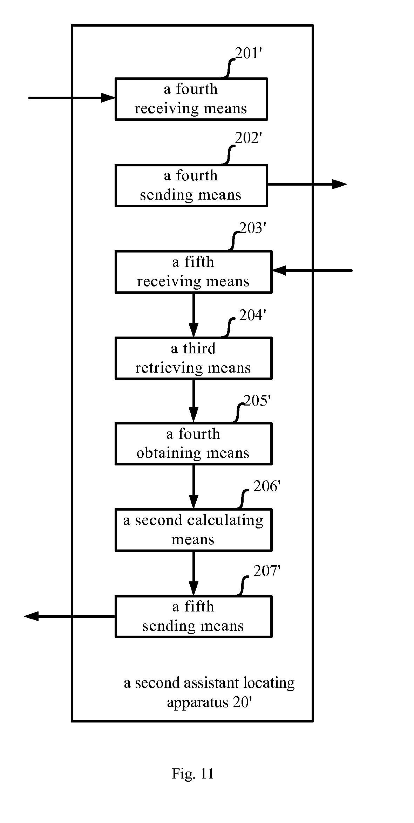

Hereinafter, referring to fig. 11, a detailed description will be given to the first aspect of the present invention according to fig. 3.

Fig. 11 is a block diagram of a second assistant locating apparatus for locating in a PHS location server of PHS network according to an embodiment of the present invention.

As shown in fig. 11, the fourth receiving means 201' is used for receiving a location services request via IP packet retransmitted by an application server, wherein, the location services request is used for requesting the relevant geographic information of the Mobile Station 1'.

After receiving the location services request via IP packet retransmitted by an application server, the fourth sending means 202' is used for sending a second location request via IP packet to the Mobile Station 1'.

After the PHS Location Server 4' sends a second location request via IP packet to the Mobile Station 1', the Mobile Station 1' receives the second location request via IP packet retransmitted by PHS Switch 2' and PHS Packet Server 3' respectively from the PHS Location Server 4'.

The PHS Switch 2' and the PHS Packet Server 3' are transparent to the Mobile Station 1' and the PHS Location Server 4'. The PHS Switch 2' indicates switching network which includes Switch and cell station system. The PHS Packet Server 3' is used to provide IP connection, which is equivalent to media gateway in network. Specifically, it is used to change the circuit switching used in the PHS Switch into packet switching.

Preferably, the second location request could comprise service key of the PHS Location Server 4'.

More preferably, the second location request could further comprise Request ID of the location services requester.

Hereinafter, the following steps that the Mobile Station 1' will perform according to the two circumstances (one is the second location request doesn't comprise Request ID of the location services requester and the other is the second location request comprises Request ID of the location services requester) will be described respectively.

### (M). the circumstance of the second location request not comprising Request ID of the location services requester

If the second location request doesn't comprise Request ID of the location services requester, the Mobile Station 1' directly sends a second location response to the PHS Location Server 4' according to the second location request without authenticating the location services requester.

### (N). the circumstance of the second location request comprising Request ID of the location services requester

If the second location request comprises Request ID of the location services requester, the Mobile Station 1' retrieves the Request ID of the location services requester from the second location request and then authenticates the location services requester according to the Request ID of the location services requester.

In an embodiment, the Mobile Station 1' could comprise a database which stores Request IDs of all the authorized location services requesters. After the Mobile Station 1' retrieves the Request ID of the location services requester from the second location request, it compares the Request ID of the location services requester with all the authorized Request IDs stored in the database to determine whether the location services requester is an authorized requester.

If the authentication for the location services requester is successful(that means the location services requester is an authorized requester), the Mobile Station 1' will send a second location response via IP packet to the PHS Location Server 4'.

Then, the fifth receiving means 203' is used for receiving the second location response via IP packet from the Mobile Station 1'.

The second location response comprises CSIDs of a plurality of cell sites surrounding the Mobile Station 1'.

The CSIDs of a plurality of cell sites surrounding the Mobile Station 1' in the second location response are indicators which can be used to calculate the geographic information of the Mobile Station 1' or the geographic information of certain place surrounding the Mobile Station 1' by the PHS Location Server 4'.

Preferably, the second location response could comprise service key of the PHS Location Server 4' and a plurality of signal intensity of the Mobile Station 1' respectively corresponding to the cell sites. We should understand that when the first location response comprises the service key of the PHS Location Server 4', that means the first location request must comprise the service key of the PHS Location Server 4'.

A plurality of signal intensity of the Mobile Station 1' respectively corresponding to the cell sites are respectively proportional to the distances between the Mobile Station 1' and a plurality of cell sites surrounding the Mobile Station 1' which are used by the PHS Location Server 4' to calculate the relevant geographic information of the Mobile Station 1' more accurately based on the geographic information of the cell sites surrounding the Mobile Station 1'.

Then, the third retrieving means 204' is used for retrieving s CSIDs of the cell sites surrounding the Mobile Station 1' from the second location request.

After retrieving CSIDs of the cell sites surrounding the Mobile Station 1' from the second location request, the fourth obtaining means 205' is used for obtaining the geographic information of the cell sites surrounding the Mobile Station 1' based on CSIDs of the cell sites surrounding the Mobile Station 1'.

Then, the second calculating means 206' is used for calculating calculates the relevant geographic information of the Mobile Station 1' based on the geographic information of the cell sites surrounding the Mobile Station 1' according a predetermined arithmetic(such as mid-value method).

Wherein, the relevant geographic information comprises the geographic information of the Mobile Station 1' or the geographic information of certain place (such as cinema or restaurant) surrounding the Mobile Station 1'.

After calculating the relevant geographic information of the Mobile Station 1', the fifth sending means 207' is used for sending sends the relevant geographic information of the Mobile Station 1' (the geographic information of the Mobile Station 1' or the geographic information of certain place surrounding the Mobile Station 1') via IP packet to the application server.

As the embodiments of the present invention have been described above, it should be understood that the present invention is not limited to the above specific embodiments. Various modifications or alterations can be made by those skilled in the art without departing from the scope as defined by the appended claims.

## Claims

1. A method of locating in a mobile station of PHS network, comprising:
a. sending a first location request via IP packet to a PHS location server, wherein said first location request comprises PSEN of said mobile station and CSIDs of a plurality of cell sites surrounding said mobile station;
b. receiving a first location response via IP packet from said PHS location server, wherein said first location response comprises relevant geographic information of said mobile station.

2. A method according to claim 1, wherein said first location request further comprises service key of said mobile station and a plurality of signal intensity of said mobile station respectively corresponding to said cell sites; and
said first location response further comprises said service key of said mobile station.

3. A method according to claim 1 or 2, wherein said relevant geographic information of said mobile station comprises geographic information of said mobile station or geographic information of certain place surrounding said mobile station.

4. A method of assistant locating in a mobile station of PHS network, comprising:
A . receiving a second location request via IP packet from a PHS location server;
C . sending a second location response via IP packet to said PHS location server, wherein, said second location response comprises CSIDs of a plurality of cell sites surrounding said mobile station.

5. A method according to claim 4, wherein after said step A and before said step C, the method further comprises:
B1 . retrieving request ID of a location services requester from said second location request, wherein said second location request comprises said request ID of said location services requester;
B2 . authenticating said location services requester according to said request ID of said location services requester;
wherein said step c comprises:
- if the authentication for said location services requester is successful, sending a second location response via IP packet to said PHS location server, wherein said second location response comprises CSIDs of a plurality of cell sites surrounding said mobile station.

6. A method according to claim 4 or 5, wherein said second location request further comprises service key of said mobile station; and
said second location response further comprises said service key of said mobile station and a plurality of signal intensity of said mobile station respectively corresponding to said cell sites.

7. A method of locating in a PHS location server of PHS network, comprising:
i. receiving a first location request via IP packet from a mobile station, wherein, said first location request comprises PSEN of said mobile station and CSIDs of a plurality of cell sites surrounding said mobile station;
ii. obtaining relevant geographic information of said mobile station based on said CSIDs of a plurality of cell sites surrounding said mobile station in said first location request;
iii. sending a first location response via IP packet to said mobile station, wherein said first location response comprises said relevant geographic information of said mobile station.

8. A method according to claim 7, wherein said step ii further comprises:
ii1. retrieving said CSIDs of said cell sites surrounding said mobile station from said first location request;
ii2. obtaining geographic information of said cell sites surrounding said mobile station based on said CSIDs of said cell sites surrounding said mobile station;
ii3. calculating said relevant geographic information of said mobile station based on said geographic information of said cell sites surrounding said mobile station.

9. A method according to claim 7 or 8, wherein said first location request further comprises service key of said mobile station and a plurality of signal intensity of said mobile station respectively corresponding to said cell sites; and
said first location response further comprises said service key of said mobile station.

10. A method according to any one of claims 7 to 9, wherein said relevant geographic information of said mobile station comprises geographic information of said mobile station or geographic information of certain place surrounding said mobile station.

11. A method of assistant locating in a PHS location server of PHS network, comprising:
I. receiving a location services request via IP packet retransmitted by an application server, wherein said location services request is used for requesting relevant geographic information of a mobile station;
II. sending a second location request via IP packet to said mobile station;
III. receiving a second location response via IP packet from said mobile station, wherein, said second location response comprises CSIDs of a plurality of cell sites surrounding said mobile station;
IV. obtaining relevant geographic information of said mobile station based on said CSIDs of said cell sites surrounding said mobile station in said second location response;
V. sending said relevant geographic information of said mobile station via IP packet to said application server.

12. A method according to claim 11, wherein said step IV further comprises:
IV1. retrieving said CSIDs of said cell sites surrounding said mobile station from said second location request;
IV2. obtaining geographic information of said cell sites surrounding said mobile station based on said CSIDs of said cell sites surrounding said mobile station;
IV3. calculating said relevant geographic information of said mobile station based on said geographic information of said cell sites surrounding said mobile station.

13. A method according to claim 11 or 12, wherein said second location request further comprises request ID of the location services requester and service key of said mobile station; and
said second location response further comprises said service key of said mobile station.

14. A method according to any one of claims 11 to 13, wherein said relevant geographic information of said mobile station comprises geographic information of said mobile station or geographic information of certain place surrounding said mobile station.

15. A first locating apparatus for locating in a mobile station of PHS network, comprising:
a first sending means for sending a first location request via IP packet to a PHS location server, wherein, said first location request comprises PSEN of said mobile station and CSIDs of a plurality of cell sites surrounding said mobile station;
a first receiving means for receiving a first location response via IP packet from said PHS location server, wherein, said first location response comprises relevant geographic information of said mobile station.

16. A first locating means according to claim 15, wherein said first location request further comprises service key of said mobile station and a plurality of signal intensity of said mobile station respectively corresponding to said cell sites; and
said first location response further comprises said service key of said mobile station.

17. A first locating apparatus according to claim 15 or 16, wherein said relevant geographic information of said mobile station comprises geographic information of said mobile station or geographic information of certain place surrounding said mobile station.

18. A first assistant locating apparatus for assistant locating in a mobile station of PHS network, comprising:
a second receiving means for receiving a second location request via IP packet from a PHS location server;
a second sending means for sending a second location response via IP packet to said PHS location server, wherein, said second location response comprises CSIDs of a plurality of cell sites surrounding said mobile station.

19. A first assistant locating apparatus according to claim 18, further comprises:
a first retrieving means for retrieving request ID of location services requester from said second location request, wherein said second location request comprises said request ID of said location services requester;
an authenticating means for authenticating said location services requester according to said request ID of said location services requester;
wherein said second sending means further for sending a second location response via IP packet to said PHS location server if the authentication for said location services requester is successful, wherein said second location response comprises CSIDs of a plurality of cell sites surrounding said mobile station.

20. A first assistant locating apparatus according to claim 18 or 19, wherein said second location request further comprises service key of said mobile station; and
said second location response further comprises said service key of said mobile station and a plurality of signal intensity of said mobile station respectively corresponding to said cell sites.

21. A second locating apparatus for locating in a PHS location server of PHS network, comprising:
a third receiving means for receiving a first location request via IP packet from a mobile station, wherein, said first location request comprises PSEN of said mobile station and CSIDs of a plurality of cell sites surrounding said mobile station;
a first obtaining means for obtaining relevant geographic information of said mobile station based on said CSIDs of a plurality of cell sites surrounding said mobile station in said first location request;
a third sending means for sending a first location response via IP packet to said mobile station, wherein said first location response comprises said relevant geographic information of said mobile station.

22. A second locating apparatus according to claim 21, wherein said first obtaining means further comprises:
a second retrieving means for retrieving said CSIDs of said cell sites surrounding said mobile station from said first location request;
a second obtaining means for obtaining geographic information of said cell sites surrounding said mobile station based on said CSIDs of said cell sites surrounding said mobile station;
a first calculating means for calculating said relevant geographic information of said mobile station based on said geographic information of said cell sites surrounding said mobile station.

23. A second locating apparatus according to claim 21 or 22, wherein said first location request further comprises service key of said mobile station and a plurality of signal intensity of said mobile station respectively corresponding to said cell sites; and
said first location response further comprises said service key of said mobile station.

24. A second locating apparatus according to any one of claims 21 to 23, wherein said relevant geographic information of said mobile station comprises geographic information of said mobile station or geographic information of certain place surrounding said mobile station.

25. A second assistant locating apparatus for locating in a PHS location server of PHS network, comprising:
a fourth receiving means for receiving a location services request via IP packet retransmitted by an application server, wherein said location services request is used for requesting relevant geographic information of a mobile station;
a fourth sending means for sending a second location request via IP packet to said mobile station;
a fifth receiving means for receiving a second location response via IP packet from said mobile station, wherein, said second location response comprises CSIDs of a plurality of cell sites surrounding said mobile station;
a third obtaining means for obtaining relevant geographic information of said mobile station based on said CSIDs of said cell sites surrounding said mobile station in said second location response;
a fifth sending means for sending said relevant geographic information of said mobile station via IP packet to said application server.

26. A second assistant locating apparatus according to claims 25, wherein said third obtaining means further comprises:
a third retrieving means for retrieving said CSIDs of said cell sites surrounding said mobile station from said second location request;
a fourth obtaining means for obtaining geographic information of said cell sites surrounding said mobile station based on said CSIDs of said cell sites surrounding said mobile station;
a second calculating means for calculating said relevant geographic information of said mobile station based on said geographic information of said cell sites surrounding said mobile station.

27. A second assistant locating apparatus according to claims 25 or 26, wherein said second location request further comprises request ID of the location services requester and service key of said mobile station; and
said second location response further comprises said service key of said mobile station.

28. A second assistant locating apparatus according to any one of claims 25 to 27, wherein said relevant geographic information of said mobile station comprises geographic information of said mobile station or geographic information of certain place surrounding said mobile station.
